# EUROPÄISCHE PATENTSCHRIFT

(11) **EP 3 814 647 B1**
(45) Veröffentlichungstag und Bekanntmachung des Hinweises auf die Patenterteilung: **03.01.2024**
(21) Anmeldenummer: 19742287.6
(22) Anmeldetag: 26.06.2019
(51) Int. Cl.: F16C 29/06

(54) **LINEARBEWEGUNGSFÜHRUNG**
LINEAR MOTION GUIDE
GUIDE DE MOUVEMENT LINÉAIRE

(30) Priorität: 27.06.2018 DE 202018003002 U
(43) Veröffentlichungstag der Anmeldung: 05.05.2021
(73) Patentinhaber: Schneeberger Holding AG, 4914 Roggwil (CH)
(72) Erfinder: BRUNI, Jaques, 4107 Ettingen (CH); GROLIMUND, Thomas, 4900 Langenthal (CH)
(74) Vertreter: Klein, Friedrich Jürgen
(86) Internationale Anmeldenummer: PCT/EP2019/000196
(87) Internationale Veröffentlichungsnummer: WO 2020/001808

(56) Entgegenhaltungen:
- DE-A1-102004 043 027
- DE-T2- 60 314 583
- DE-U1-202012 101 098
- DE-U1-202016 100 552
- US-A- 5 947 605
- US-A1- 2015 285 299

## Beschreibung

Die Erfindung betrifft einen Schlitten einer Linearbewegungsführung zur Anordnung auf einer Schiene der Linearbewegungsführung, der einen zumindest im wesentlichen U-förmigen Querschnitt aufweist und zumindest mit einem im wesentlichen U-förmigen Grundkörper versehen ist, der Grundkörper hierbei mit Kunststoffbauteilen ergänzt ist, wobei der Schlitten in beiden Schenkeln der U-Form jeweils mit zumindest einem zur Zirkulation von Wälzkörpern in sich geschlossenen Wälzkörperumlauf versehen ist, der jeweils zur Schiene hin offen gehalten ist.

Derartige Linearbewegungsführungen werden zur geradlinigen Führung von Maschinenteilen eingesetzt, wie dies beispielsweise bei der Bewegung der translatorischen Achsen einer Werkzeugmaschine erforderlich ist. Die Führungsschiene wird dabei auf einem Untergrund befestigt, in der Regel durch Schraubverbindungen. Der Schlitten, der auch als Führungswagen bezeichnet werden kann, ist in beiden Schenkeln seiner in grober Näherung U-Form jeweils mit zumindest einem Wälzkörperumlauf versehen. In letzterem zirkulieren Wälzkörper. In einem geradlinig und parallel zur Längsachse der Führungsschiene verlaufenden Lastabschnitt des Wälzkörperumlaufs stützen sich die jeweils momentan dort befindlichen Wälzkörper sowohl am Schlitten als auch auf einer Seitenfläche der Führungsschiene ab. Hierdurch kann sowohl eine lineare Relativbewegung zwischen der Führungsschiene und dem Schlitten als auch eine Lastabtragung, insbesondere von einer auf den Schlitten wirkenden Last auf die Schiene stattfinden.

Obwohl die Linearbewegungsführungen oftmals in einer stark verschmutzten Umgebung und bei ungünstigen Bedingungen, wie beispielsweise hohen oder stark schwankenden Temperaturen, eingesetzt werden, wird von ihnen eine hohe Präzision gefordert. Eine wesentliche Voraussetzung hierfür ist, dass die Wälzelemente nicht verschmutzen, da dies auf Verschleiss und die Führungsgenauigkeit einen nachteiligen Einfluss hat. Auf den Verschleiss wirken sich auch Ungenauigkeiten im Wälzkörperumlauf negativ aus.

An Linearbewegungsführungen werden zudem Anforderungen bezüglich eines möglichst einfachen Aufbaus und einer möglichst einfachen Montage gestellt. Lösungen zur Erfüllung dieser Anforderungen stehen jedoch oftmals den an Linearbewegungsführungen gestellten Anforderungen an Führungsgenauigkeit und Laufruhe entgegen. US 2015/0285299 zeigt eine Linearbewegungsführung mit einem gattungsgemäßen Schlitten.

Der Erfindung liegt deshalb die Aufgabe zugrunde, eine Massnahme anzugeben, durch welche Wälzkörper eines Schlittens der eingangs genannten Art einer Linearbewegungsführung präzise geführt sind und der Schlitten trotzdem mit möglichst geringem Aufwand montierbar ist.

Diese Aufgabe wird bei einem Führungswagen beziehungsweise bei einem Schlitten für eine Linearbewegungsführung der eingangs genannten Art erfindungsgemäss durch das Kennzeichen von Anspruch 1 gelöst. Hierbei kann vorgesehen sein, daß mittels jeweils eines, insbesondere nur eines, einstückigen Kunststoffbauteils, in jedem der beiden Schenkeln des Schlittens jeweils zumindest Teile von inneren und äusseren Begrenzungsflächen eines Rücklaufkanals sowie von inneren und äusseren Begrenzungsflächen beider Umlenkkanäle von einem der Wälzkörperumläufe im jeweiligen Schenkel ausgebildet sind.

Die Aufgabe wird zudem durch eine Linearbewegungsführung gemäss des Anspruchs 11 gelöst.

Erfindungsgemäss können somit in bevorzugter Weise sämtliche inneren und äusseren Begrenzungsflächen von Rücklauf- und Umlenkkanälen von zwei Wälzkörperumläufen in unterschiedlichen Schenkeln des Schlittens an einem einzigen gemeinsamen Kunststoffbauteil einstückig ausgebildet sein. Auf diese Weise lassen sich nicht nur die Anzahl von Bauteil- und Werkstoffübergängen in jeweils einem Wälzkörperumlauf reduzieren, welche die Gefahr von Laufunruhen und einem erhöhten Verschleiss in sich bergen. Es kann durch die einstückige Ausbildung zudem auch auf eine möglichst einfache Weise die Gefahr von Ungenauigkeiten bezüglich der gegenseitigen Ausrichtung der Wälzkörperumläufe auf beiden Seiten der Schiene verringert werden.

Insbesondere die erfindungsgemässe einstückige und somit stufen- bzw. übergangslose und fugenlose Ausgestaltung der Übergänge zwischen dem jeweiligen Rücklaufkanal und den durch Flieh- und Druckkräften belasteten äusseren Begrenzungsflächen der Umlenkkanäle wirken sich sowohl auf das Verschleiss- als auch auf das Laufruheverhalten des Schlittens positiv aus.

Durch die vorteilhaften und bevorzugten erfindungsgemässen Massnahmen ergibt sich auch eine besonders einfache, schnelle und trotzdem passgenaue Montage eines erfindungsgemässen Schlittens. Die für die Ausbildung von zumindest jeweils einem Wälzkörperumlauf auf beiden Seiten der Führungsschiene erforderlichen wenigen Bauteile lassen sich besonders schnell und genau montieren. Durch die einstückige Ausgestaltung eignet sich die Erfindung insbesondere auch für besonders kleine Linearbewegungsführungen, bei denen die sich aus der Grösse solcher Führungen ergebenden Bauteile mit geringer Grösse an sich besonders schwierig für die Montage zu handhaben und gegeneinander auszurichten sind. Durch die Zusammenfassung von sonst üblichen mehreren, baulich voneinander getrennten Bauteilen, zu einem einzigen einstückigen Bauteil, wird diese Schwierigkeit überwunden.

Erfindungsgemäß sind beiden einstückigen Kunststoffteile von Wälzkörperumläufen von unterschiedlichen Schenkeln einstückig miteinander verbunden.

In einer weiteren bevorzugten Ausführungsform der Erfindung können am einstückigen Kunststoffbauteil sämtliche unteren, inneren und äusseren Begrenzungsflächen der in beiden Schenkeln des Schlittens vorgesehenen Bestandteile der Wälzkörperumläufen ausgebildet sein. Hierdurch kann die Montage nochmals vereinfacht und die Sicherstellung korrekter Ausrichtungen von einzelnen Komponenten des Schlittens nochmals gesteigert werden. Der Lastbereich jedes Wälzkörperumlaufs kann hingegen vorzugsweise an jeweils einer Fläche des Grundkörpers des Schlittens ausgebildet sein, vorzugsweise an sich gegenüberliegenden Innenflächen der Schenkel des Grundkörpers. Diese Flächen der Lastbereiche sind Außenflächen der Schenkel des Schlittens und des Grundkörpers und befinden sich somit vorzugsweise jeweils an einem und nicht in einem der Schenkel des Schlittens.

In einer besonders bevorzugten Ausführungsform der Erfindung lässt sich der Montageaufwand nochmals dadurch reduzieren, dass der einfügbare Einsatz als Kunststoffbauteil ausgebildet ist.

Schliesslich lässt sich der Montageaufwand nochmals verringern und die Ausrichtungsgenauigkeit der Komponenten mehrerer Wälzkörperumläufe des Schlittens lassen sich nochmals erhöhen, wenn bei einer besonders bevorzugten Ausführungsform der Erfindung Einsätze von Wälzkörperumläufen unterschiedlicher Schenkeln des Schlittens und zumindest ein, vorzugsweise zwei, die beiden Einsätze miteinander verbindende Brückenteile als insgesamt einstückiges Einsatzbauteil ausgebildet sind.

Erfindungsgemäß ist für zwei in unterschiedlichen Schenkeln des Schlittens angeordnete Wälzkörperumläufe jeweils ein Einsatz zur Ausbildung oberer Begrenzungsflächen vorgesehen, wobei die beiden Einsätze mit zumindest einem Brückenabschnitt einstückig miteinander verbunden sind. Ferner kann vorteilhafter Weise vorgesehen sein, dass jeweils im Bereich oberer Begrenzungsflächen der Umlenkkanäle jeweils ein Brückenabschnitt ausgebildet ist, der sich über den oberen Begrenzungsflächen und über den Wälzkörperumläufen befindet und jeweils einstückig mit den Einsätzen ausgebildet ist. Durch eine solche Massnahme kann das Einsatzbauteil leicht aber trotzdem besonders stabil gestaltet sein. Ausserdem lassen sich die stirnseitig am Einsatzbauteil angeordneten Brückenteile zur Erzeugung einer lösbaren Verbindung mit dem einstückigen Kunststoffbauteil und/oder mit dem metallischen Grundkörper nutzen, der vorzugsweise zwischen den beiden Brückenteilen des Einsatzbauteils eingefügt ist.

Zur Reduzierung des Montageaufwands kann eine weitere bevorzugte Lösung beitragen. Bei dieser ist das einstückige Kunststoffbauteil mittels zumindest einer Schnappverbindung an einer anderen Komponente des Schlittens lösbar befestigt bzw mit dieser lösbar verbunden. Vorzugsweise ist das einstückige Kunststoffbauteil an seinen beiden Stirnseiten jeweils mit zumindest einer Schnappverbindung lösbar befestigt, wobei die Schnappverbindungen an beiden Stirnseiten vorzugsweise mit der gleichen Komponente des Schlittens vorgesehen sind. Vorzugsweise ist das einstückige Kunststoffbauteil am Einsatzbauteil mittels der zumindest zwei Schnappverbindungen befestigt, wobei das Einsatzbauteil vorzugsweise in das einstückige Kunststoffbauteil derart eingefügt ist, dass sich die beiden Brückenteile des Einsatzelements zwischen den beiden plattenförmigen Abschnitten des einstückigen Kunststoffbauteils befinden.

Das Einsatzbauteil hingegen ist vorzugsweise am metallischen Grundkörper befestigt, wobei auch diese Befestigung vorzugsweise als zumindest eine Schnappverbindung ausgebildet ist. Eine besonders vorteilhafte Weiterbildung dieser Lösung kann vorsehen, dass das Einsatzbauteil im Bereich seiner beiden Brückenteile jeweils mit einer Schnappverbindung am Grundkörper des Schlittens lösbar befestigt ist.

Hinsichtlich einer - in einer Richtung quer zur vorgesehenen Längsbewegungsrichtung gesehenen - Richtung, können die Schnappverbindungen vorzugsweise jeweils mittig angeordnet sein. Besonders günstige Eigenschaften können sich dadurch ergeben, dass sämtliche Schnappverbindungen zwischen dem Grundkörper, dem Einsatzelement und dem einstückigen Kunststoffbauteil entlang einer Achse angeordnet sind, die, in der Gebrauchslage des Schlittens auf der Führungsschiene, parallel zur Längsachse der Schiene verläuft.

Weitere bevorzugte Ausgestaltungen der Erfindung ergeben sich aus den Ansprüchen, der Beschreibung und der Zeichnung.

Die Erfindung wird anhand von in den Figuren rein schematisch dargestellten Ausführungsbeispielen näher erläutert, es zeigen:
- Fig. 1: eine perspektivische Darstellung einer bevorzugten Ausführungsform einer erfindungsgemässen Linearbewegungsführung mit einer Führungsschiene und einem auf der Führungsschiene angeordneten längsverschiebbaren Schlitten:
- Fig. 2: eine Draufsicht auf die Linearbewegungsführung aus Fig. 1;
- Fig. 3: eine Seitenansicht der Linearbewegungsführung aus Fig. 1;
- Fig. 4: eine Querschnittsdarstellung des Schlittens der Linearbewegungsführung aus Fig. 1, zusammen mit einer Seitenansicht und einer Draufsicht der Linearbewegungsführung;
- Fig. 5: eine Längsschnittdarstellung des Schlittens der Linearbewegungsführung aus Fig. 1;
- Fig. 6: eine Explosionsdarstellung des Schlittens aus Fig. 1;
- Fig. 7: eine perspektivische Darstellung von zwei jeweils einstückigen Bauteilen des Schlittens aus Fig. 1; mit welchen Rücklauf- und Umlenkkanäle von Wälzkörperumläufen ausgebildet werden, sowie eine Ansicht von unten von einem der beiden Bauteile;
- Fig. 8: eine perspektivische Darstellung der aneinander montierten Bauteile aus Fig. 7 sowie einem Grundkörper des Schlittens;

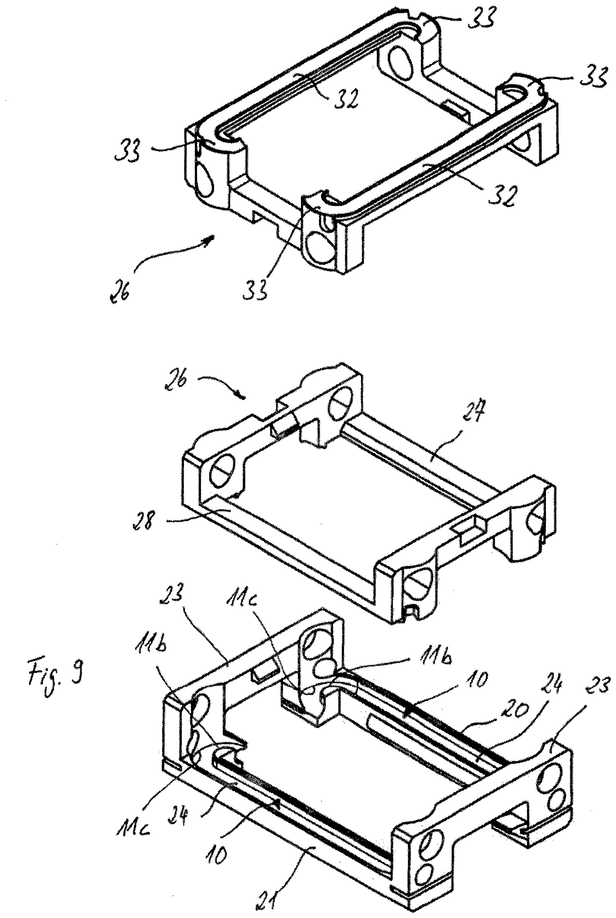

- Fig. 9: eine Darstellung gemäss Fig. 7 mit einer gedrehten Perspektive auf die Bauteile.

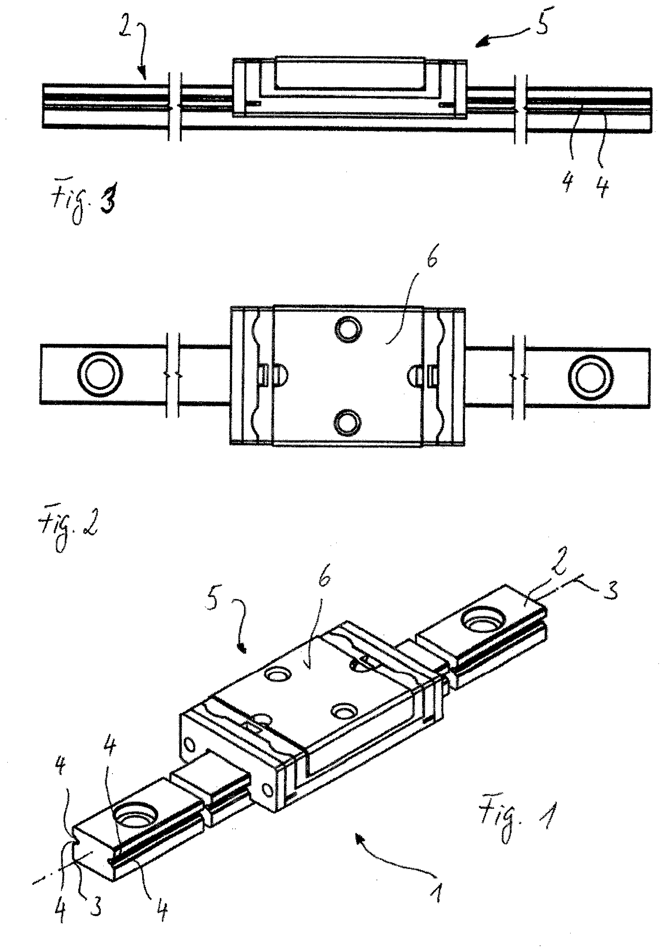

In Fig. 1 ist eine Linearbewegungsführung 1 gezeigt, die eine Führungsschiene 2 sowie einen auf der Führungsschiene 2 angeordneten und entlang der Längsachse 3 der Führungsschiene längsverschiebbaren Schlitten 5 aufweist. Die Führungsschiene 2 ist mittels Schraubverbindungen auf einem geeigneten Untergrund befestigt. Wie aus Fig. 1 ersichtlich ist, weist die Führungsschiene 2 eine im wesentlichen rechteckige Querschnittsform auf, wobei sie an ihren beiden Seitenflächen jeweils mit zwei Laufflächen 4 für Wälzkörper versehen ist. Die beiden Laufflächen 4 auf jeder Seite sind in einem Winkel von 90° zueinander angeordnet und zum Kontakt und zur Abstützung von Wälzkörper des Schlittens 5 vorgesehen ist. Die Winkelangabe ist nur beispielhaft angeführt, im Zusammenhang mit der vorliegenden Erfindung können auch andere Winkelbeträge vorgesehen sein.

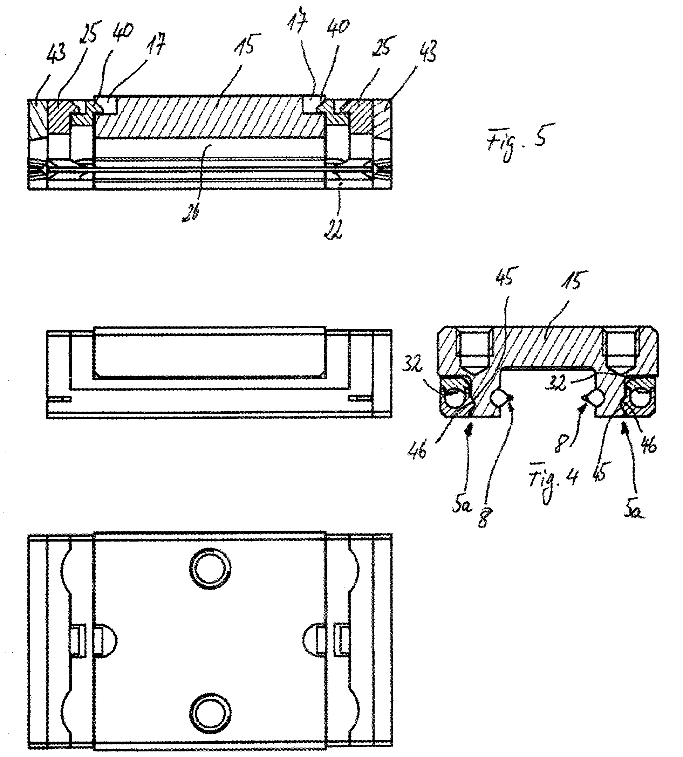

Der Schlitten 5, der auch als Führungswagen bezeichnet werden kann, weist auf einer Oberseite eine zumindest im wesentlichen ebene Montagefläche 6 auf, die zur Aufnahme, Anordnung und zur geführten Bewegung auf dem Schlitten einer (nicht dargestellten) zu bewegenden Last vorgesehen ist. Wie insbesondere in Fig. 4 zu erkennen ist, weist der Schlitten 5 bezüglich eines Querschnitts eine im wesentlichen U-Form auf. In der Darstellung von Fig. 1, welche die übliche Einsatzweise mit einer Anordnung der Schiene auf einer horizontalen Oberseite der Linearbewegungsführung 1 wiedergibt, ist die U-Form um 180° gedreht. Prinzipiell ist die Linearbewegungsführung 1 mit jeder beliebigen räumlichen Ausrichtung der Schiene 2 einsetzbar.

Der Schlitten 5 des hier dargestellten erfindungsgemässen Ausführungsbeispiels ist in jedem seiner beiden sich aus der U-Form ergebenden Schenkeln 5a mit jeweils einem Wälzkörperumlauf 7 versehen. Jeder der beiden Wälzkörperumläufe 7 ist mit Kugeln 8, üblicherweise Stahlkugeln, als Wälzkörper gefüllt, die bei einer Relativbewegung des Schlittens 5 gegenüber der Schiene 2 in Längsrichtung der Schiene 2 - und damit in der Bewegungsrichtung der Linearbewegungsführung - in ihrem jeweiligen Wälzkörperumlauf 7 zirkulieren. Die spiegelsymmetrisch aber sonst identisch aufgebauten beiden Wälzkörperumläufe 7 weisen jeweils einen den Laufflächen 4 der Schiene 2 unmittelbar gegenüberliegenden geradlinig und parallel zur Längsachse 3 der Schiene verlaufenden Lastbereich 8 bzw Lastabschnitt auf. Parallel und mit Abstand zum jeweiligen Lastbereich 8 ist jeder Wälzkörperumlauf 7 mit einem Rücklaufkanal 10 für die Wälzkörper versehen. Die Längen des jeweiligen Lastbereichs 8 und der Rücklaufkanäle 10 sind identisch. Der Rücklaufkanal 10 und der Lastbereich 8 jedes Wälzkörperumlaufs 7 sind an ihren beiden Enden jeweils mittels eines Umlenkkanals 11 miteinander verbunden. Jeder der beiden Umlenkkanäle 11 eines Wälzkörperumlaufs 7 weist einen gekrümmten Verlauf auf und verläuft entlang eines Kreisbogens von zumindest ungefähr 180°. Die Rücklaufkanäle 10 und die Umlenkkanäle 11 weisen über ihre gesamten Längen einen konstanten Querschnitt auf und sind bezüglich ihres Querschnitts vollständig geschlossen. Im Lastbereich 8 sind lediglich an einer Innenseite des jeweiligen Schenkels des Schlittens 5 Lastflächen 14 ausgebildet, welche die Wälzkörper kontaktieren, während sie gleichzeitig gegen die Laufflächen 4 der Schiene 2 anliegen.

Wie unter anderem aus Fig. 1, 4 und 6 hervorgeht, weist der Schlitten 5 einen Grundkörper 15, insbesondere einen metallischen Grundkörper, auf. Am metallischen Grundkörper 15 ist ein Montagetisch mit einer Montagefläche 6 zur Anordnung einer Last am Schlitten 5 ausgebildet. Auch der Grundkörper 15 weist bereits die im wesentlichen U-Form des Schlittens 5 auf. Hierzu stehen vom Montagetisch zwei parallel und mit Abstand zueinander ausgerichtete Schenkel des Grundkörpers 15 senkrecht ab. Gemäss dieser hier gezeigten bevorzugten Ausführungsform der Erfindung sind am Grundkörper 15 von den beiden Wälzkörperumläufen 7 lediglich die Flächen der Lastbereiche 8 der Wälzkörperumläufe 7 ausgebildet. Sämtliche weiteren Kanäle 10, 11 und deren Flächen der beiden Wälzkörperumläufe 7 sind an insgesamt nur zwei weiteren Bauteilen des Schlittens 5 ausgebildet, wie nachfolgend näher erläutert wird.

Im Bereich von stirnseitigen Kanten des Grundkörpers 15 ist dieser mit jeweils einer mittig angeordneten Ausnehmung 17 versehen. In diese kann jeweils eine Rastnase eines anderen Bauteils zur Erzeugung einer Rastverbindung angeordnet werden, wie nachfolgend noch erläutert wird.

Beim ersten dieser beiden aus Kunststoff, vorzugsweise in jeweils einem Spritzgiessverfahren, hergestellten Bauteile sind zwei parallel zueinander verlaufenden Stege 20, 21 vorgesehen, die mit ihrer Längserstreckung parallel zur Längsachse der Schiene 2 verlaufen. Die beiden Stege 20, 21 dieses einstückigen Kunststoffbauteils 22 sind an ihren stirnseitigen Enden mittels jeweils eines im wesentlichen wiederum U-förmigen plattenförmigen Abschnitts 23 des einstückigen Kunststoffteils 22 miteinander verbunden. Die plattenförmigen Abschnitte 23 haben eine brückenartige Form und sind an unteren Enden mit den Endbereichen der Stege 20, 21 verbunden. Die beiden plattenförmigen Abschnitte 23 sind parallel zueinander und im wesentlichen quer zur Längserstreckung der Stege 20, 21 ausgerichtet.

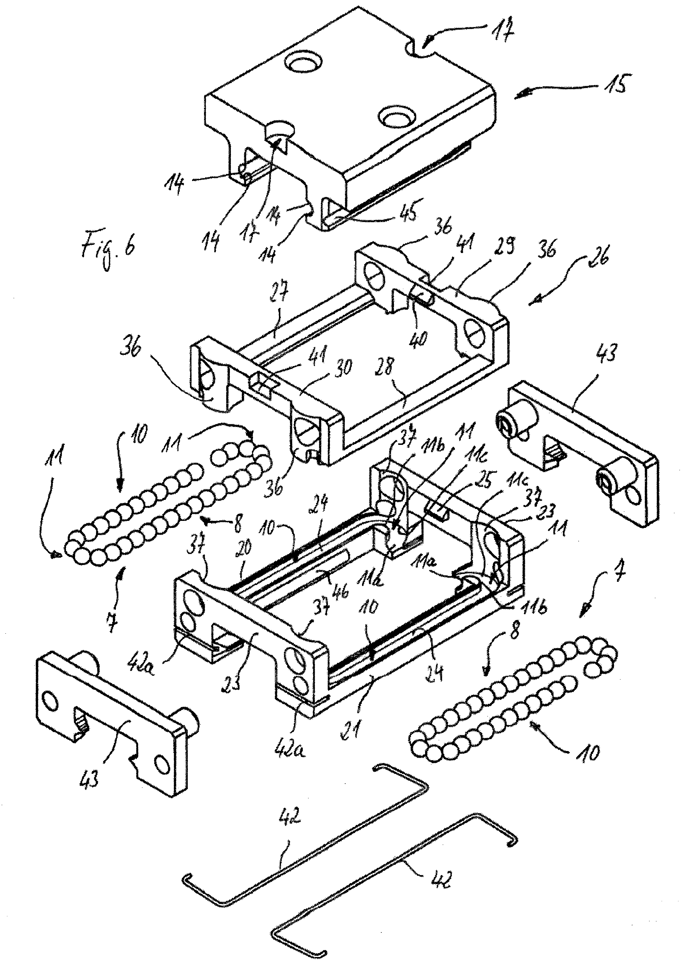

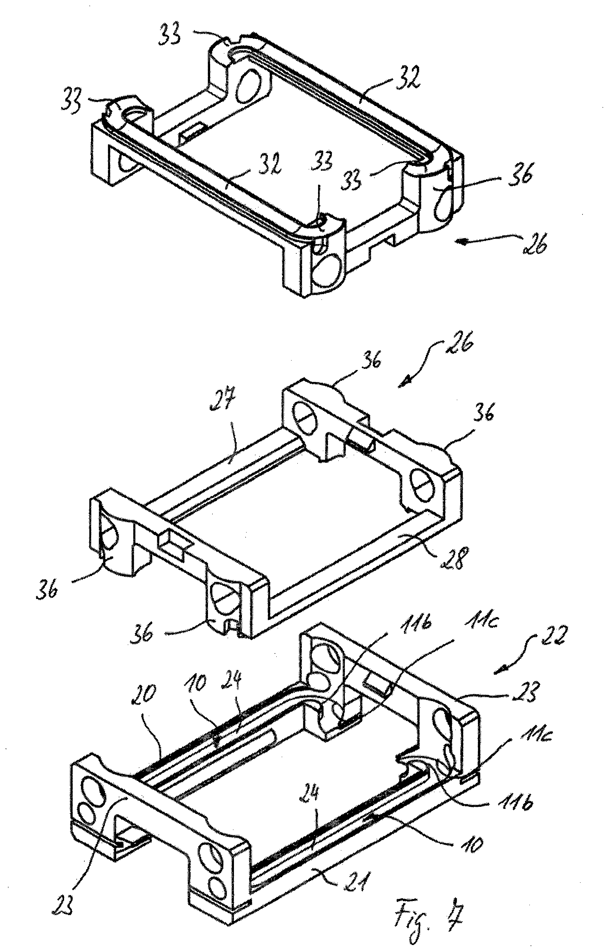

Wie unter anderem aus Fig. 6 und 7 ersichtlich ist, ist auf den Oberseiten der Stege eine geradlinige, nach oben offene Rinne 24 ausgebildet. Die Querschnittsform dieser jeweiligen Rinne 24 entspricht im wesentlichen einer - in der Darstellung von Fig. 4 - nach oben offenen Halbkreisform, die beidseits der Enden der Halbkreisform mit jeweils einem geradlinigen Abschnitt fortgesetzt ist. Die beiden geradlinigen Abschnitte verlaufen parallel zueinander und weisen einen Abstand zueinander auf, die dem Durchmesser der Halbkreisform entspricht. Die Länge der parallel zueinander verlaufenden Abschnitte der Querschnittsform entspricht zumindest näherungsweise dem Radius der Halbkreisform. Diese nach oben offene Rinne 24 ist Teil des jeweiligen Rücklaufkanals 10 des entsprechenden Wälzkörperumlaufs 7.

An beiden stirnseitigen Enden der nach oben offenen Rinnenabschnitte des Rücklaufkanals 10 schliesst sich ein zur Schiene 2 hin gekrümmter weiterer Rinnenabschnitt an. Diese weiteren Rinnenabschnitte sind untere Bereiche der jeweils einem zum gleichen Wälzkörperumlauf 7 gehörenden Umlenkkanäle 11. In Bezug auf die Querschnittsformen sind die Rinnenbereiche der Rücklaufkanäle 10 und die Querschnittsform sämtlicher Umlenkkanäle 11 identisch. Die Rinnenbereiche der Umlenkkanäle 11 weisen somit als Begrenzungsflächen einen unteren Wandbereich 11a sowie einen inneren 11b und einen äusseren Wandbereich 11c des jeweiligen Umlenkkanals 11 auf.

Die somit insgesamt am einstückigen Kunststoffbauteil 22 ausgebildeten unteren, sowie die inneren und die äusseren Wandflächen bzw Wandbereiche des Rücklaufkanals 10 und der beiden Umlenkkanäle 11 für jeden der beiden Wälzkörperumläufe 7, sind über die gesamte Länge stufenlos und mit konstanter Querschnittsform versehen. Am Einsatzbauteil sind somit die vollständigen unteren, äusseren und inneren Begrenzungsflächen dieser Kanäle ausgebildet, insbesondere stufenlos ausgebildet.

In Fig. 6 ist ausserdem erkennbar, dass auf der Innenseite von jedem der beiden plattenförmigen Abschnitte 23 im Bereich einer oberen Kante eine Rastnase 25 einer Schnappverbindung ausgebildet ist. Diese - in Bezug auf Ihre Längserstreckung - mittig an den Innenseiten beider plattenförmigen Abschnitte 23 vorgesehenen Rastnasen 25 sind in Bezug auf die plattenförmigen Abschnitte 23 zumindest geringfügig elastisch auslenkbar.

In den Fig. 6 und 7 ist schliesslich das zweite Bauteil zur Ausbildung der Wälzkörperumläufe dargestellt, das nachfolgend als Einsatzbauteil 26 bezeichnet wird. Das Einsatzbauteil 26 ist bezüglich seiner äusseren Form grundsätzlich ähnlich gestaltet, wie das einstückige Kunststoffbauteil 22. Auch das ebenfalls einstückig gestaltete Einsatzbauteil 26 weist zwei mit konstantem Abstand zueinander ausgerichtete Stege 27, 28 auf, die in ihrer Gebrauchslage am Schlitten 5 parallel zu den Stegen 20, 21 des einstückigen Kunststoffbauteils 22 ausgerichtet sind. Auch die Stege 27, 28 sind über quer zu den Stegen 27, 28 und jeweils an ihren stirnseitigen Enden ansetzenden Bauteilabschnitte, die nachfolgend als Brückenteile 29, 30 bezeichnet sind, einstückig miteinander verbunden. Der Abstand der Brückenteile 29, 30 zueinander ist hierbei geringer als der Abstand der plattenförmigen Abschnitte 23 zueinander. Auch die Brückenteile 29, 30 des Einsatzbauteils 26 weisen zumindest näherungsweise eine U-Form auf, durch welche das Einsatzbauteil - wie der Grundkörper und das einstückige Kunststoffbauteil auch - die Schiene 2 zwischen seinen parallelen Schenkeln der U-Form aufnehmen kann.

Fig. 4 kann entnommen werden, dass an der jeweiligen Unterseite der beiden Stege 27, 28 des Einsatzbauteils 26 obere Begrenzungsflächen 32 bzw Wandbereiche der Rücklaufkanäle 10 ausgebildet sind. Ebenso sind an der Unterseite des Einsatzbauteils 26 die oberen Begrenzungsflächen 33 der jeweils beiden Umlenkkanäle 11 beider Wälzkörperumläufe 7 ausgebildet. Die jeweilige obere Begrenzungsfläche 33 des jeweiligen Umlenkkanals 11 geht übergangs- und stufenlos in die jeweilige obere Begrenzungsfläche 32 des jeweiligen Rücklaufkanals 10 des gleichen Wälzkörperumlaufs 7 über. Die somit am Einsatzbauteil 26 insgesamt ausgebildete obere Begrenzungsflächen 32, 33 des Rücklaufkanals 10 und der beiden Umlenkkanäle 11 für jeden der beiden Wälzkörperumläufe 7 ist über die gesamte Länge einstückig, stufenlos und mit konstanter Querschnittsform versehen. Am Einsatzbauteil 26 sind somit die vollständigen oberen Begrenzungsflächen der Umlenkkanäle 10 und der Rücklaufkanäle 11 ausgebildet. Die Rücklaufkanäle und die Umlenkkanäle sind somit an ihrem jeweiligen Umfang in sich geschlossen.

Schliesslich weist jeder der beiden Brückenteile 29, 30 an ihren zwei Aussenseiten zylinderabschnittsförmige Ausbauchungen 36 auf, die sich jeweils in etwa auf Höhe der Stege 27, 28 befinden. In jeder der Ausbauchungen 36 ist zudem jeweils in etwa oberhalb jedes Stegs 27, 28 eine Durchgangsbohrung vorgesehen. Grösse, Form und Position der Ausbauchungen 36 sind auf konkave Ausformungen 37 an Innenflächen des einstückigen Kunststoffbauteils 22 angepasst. Auch die plattenförmigen Abschnitte 23 des einstückigen Kunststoffbauteils 22 sind im Bereich der konkaven Ausformungen 37 mit jeweils einer Durchgangsbohrung versehen.

In Fig. 6 ist ausserdem erkennbar, dass auf der Innenseite von jedem der beiden Brückenteile 29, 30 im Bereich einer oberen Kante eine Rastnase 40 einer Schnappverbindung ausgebildet ist. Diese mittig an den Innenseiten beider Brückenteile 29, 30 vorgesehen Rastnasen 40 sind in Bezug auf die Brückenteile zumindest geringfügig elastisch auslenkbar.

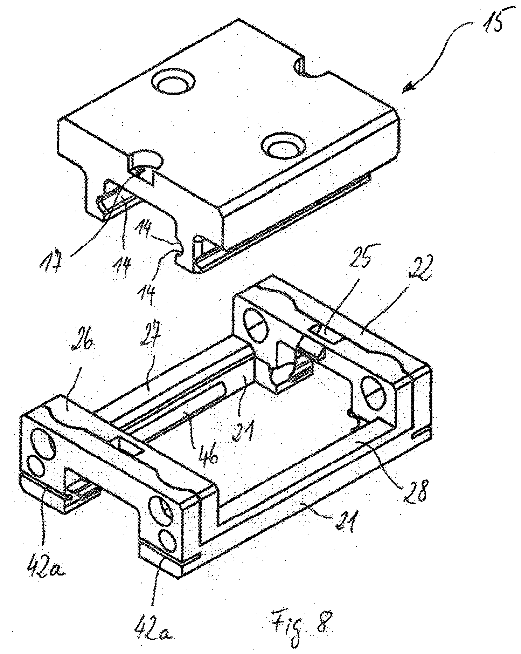

In der Explosionsdarstellung von Fig. 6 sowie in Fig. 8 ist zu erkennen, dass der metallische Grundkörper 15 in das Einsatzbauteil 26 und das Einsatzbauteil 26 wiederum in das einstückige Kunststoffbauteil 22 einsetzbar ist. Hierbei gelangen die Rastnasen 40 des Einsatzbauteils 26 in die Ausnehmungen 17 des metallischen Grundkörpers 15. Durch eine elastische Vorspannung der Rastnasen 40 wird hierdurch das Einsatzbauteil 26 am Grundkörper 15 verrastet und damit lösbar befestigt. In anderen Ausführungsformen der Erfindung kann jede der hier beschriebenen Schnapp- oder Rastverbindungen konstruktiv und im Detail auch anderweitig ausgebildet sein.

Des Weiteren ist das Einsatzbauteil in das einstückige Kunststoffbauteil einsetzbar. Hierdurch gelangen die Stege 27, 28 des Einsatzbauteils 26 über die Stege 20, 21 des einstückigen Kunststoffbauteils 22, wodurch die oberen Begrenzungsflächen 32, 33 der Stege 27, 28 die durch die Stege 20, 21 sich ergebenden Rinnen der Umlenk- und der Rücklaufkanäle 10, 11 abdecken und somit die diese Rinnen zu Umlenk- und Rücklaufkanälen 10, 11 komplementieren. Zudem gelangen durch diese Einsatzbewegung auch die Rastnasen 23 des einstückigen Kunststoffbauteils 22 in stirnseitig vorgesehene Ausnehmungen 41 des Einsatzbauteils, wodurch das Einsatzbauteil 26 und das einstückige Kunststoffbauteil 22 lösbar miteinander verbunden sind. Über die jeweils miteinander fluchtenden Ausnehmungen des Kunststoffbauteils 22 und des Einsatzbauteils 26 sind die Wälzkörper in die Wälzkörperumläufe einfüllbar. Mit einem am Schlitten 5 in Aufnahmerillen 42a befestigbaren Bügel 42 pro Wälzkörperumlauf 7 werden die Wälzkörper (hier Kugeln) vor einem Herausfallen aus dem Lastbereich 8 gesichert.

Als Montage- und Zentrierungshilfe weist jeder Steg 20, 21 an seiner zum Grundkörper gewandten Seite ein Formschlusselement 46 auf. Ebenso ist jeder Schenkel des Grundkörpers an seiner Aussenseite mit einem zum Formschlusselement des jeweiligen Stegs 20, 21 kongruenten Formschlusselement 45 versehen. Die jeweils beiden Formschlusselement 45, 46 greifen im montierten Schlitten 5 in vorbestimmter Weise ineinander, so dass der Grundkörper und das einstückige Kunststoffbauteil in vorbestimmter Weise gegeneinander ausgerichtet sind. Im dargestellten Ausführungsbeispiel ist das Formschlusselement 45 des Grundkörpers eine konkav geformte und parallel zum Steg verlaufende Rinne. Das Formschlusselement 46 des Kunststoffbauteils 22 ist hingegen eine konvex geformte Leiste, deren Form, Grösse und Länge, der Form, Grösse und Länge der Rinne des Grundkörpers 15 entspricht. Die Leiste kann somit in einer vorbestimmten eindeutigen Position in der Rinne angeordnet werden, wodurch sich auch eine vorbestimmte eindeutige Position zwischen dem Grundkörper 15 und dem Kunststoffbauteil 22 und damit auch dem Einsatzbauteil ergibt.

Mittels an beiden Stirnseiten des Schlittens 5 anfügbare Stirnplatten 43 sind die Ausnehmungen verschliessbar. In die Stirnplatten 43 können Abstreifer integriert sein, welche die Laufflächen 4 der Schiene 2 von Schmutz abstreifen.

### Bezugszeichenliste

| | | | |
|---|---|---|---|
| 1 | Linearbewegungsführung | 27 | Steg (von 26) |
| 2 | Führungsschiene | 28 | Steg (von 26) |
| 3 | Längsachse | 29 | Brückenteil |
| 4 | Laufflächen | 30 | Brückenteil |
| 5 | Schlitten | 32 | obere Begrenzungsfläche (von 10) |
| 5a | Schenkel | | |
| 6 | Montagefläche | 33 | obere Begrenzungsfläche (von 11) |
| 7 | Wälzkörperumlauf | | |
| 8 | Lastbereich | 36 | Ausbauchung (von 26) |
| 10 | Rücklaufkanal | 37 | konkave Ausformungen (von 22) |
| 11 | Umlenkkanal | 40 | Rastnase (von 29, 30) |
| 11a | unterer Wandbereich | 41 | Ausnehmung (von 26) |
| 11b | innerer Wandbereich | 42 | Bügel |
| 11c | äusserer Wandbereich | 42a | Aufnahmerille |
| 14 | Lastflächen | 43 | Stirnplatten |
| 15 | Grundkörper | 45 | Formschlusselement (von 15) |
| 17 | Ausnehmung (von 15) | 46 | Formschlusselement (von 22) |
| 20 | Steg (von 22) | | |
| 21 | Steg (von 22) | | |
| 22 | einstückiges Kunststoffbauteil | | |
| 23 | plattenförmiger Abschnitt | | |
| 25 | Rastnase (von 23) | | |
| 26 | Einsatzbauteil | | |

## Patentansprüche

1. Schlitten (5) einer Linearbewegungsführung (1) zur Anordnung auf einer Schiene (2) der Linearbewegungsführung, der einen zumindest im wesentlichen U-förmigen Querschnitt aufweist und zumindest mit einem im wesentlichen U-förmigen Grundkörper (15) versehen ist, der mit Kunststoffbauteilen ergänzt ist, wobei der Schlitten (5) in beiden Schenkeln (5a) der U-Form jeweils mit zumindest einem in sich geschlossenen Wälzkörperumlauf (7) versehen ist, der jeweils zur Schiene (2) hin offen gehalten ist,
**dadurch gekennzeichnet, daß**
mittels eines einstückigen Kunststoffbauteils (22) in beiden Schenkeln (5a) des Schlittens (5) jeweils zumindest Teile von inneren und äusseren Begrenzungsflächen eines Rücklaufkanals (10) und beider Umlenkkanäle (11) von einer der Wälzkörperumläufe (7) im jeweiligen Schenkel (5a) ausgebildet sind, und daß für zwei in unterschiedlichen Schenkeln (5a) des Schlittens (5) angeordneten Wälzkörperumläufen (7) jeweils ein Einsatz zur Ausbildung oberer Begrenzungsflächen (32, 33) vorgesehen ist, wobei die beiden Einsätze mit zumindest einem Brückenabschnitt oder Brückenteil (29, 30) einstückig miteinander verbunden sind.

2. Schlitten nach Anspruch 1, **dadurch gekennzeichnet, dass** am einstückigen Kunststoffbauteil (22) sowohl die vollständigen inneren als auch die vollständigen äusseren Begrenzungsflächen von jeweils beiden Umlenkkanälen (11) der in jedem der beiden Schenkel vorgesehenen Wälzkörperumläufen (7) ausgebildet sind.

3. Schlitten nach Anspruch 1 oder 2, **dadurch gekennzeichnet, dass** am einstückigen Kunststoffbauteil (22) sämtliche unteren, inneren und äusseren Begrenzungsflächen der in beiden Schenkeln (5a) des Schlittens (5) vorgesehenen Wälzkörperumläufen (7) ausgebildet sind.

4. Schlitten nach einem der Ansprüche 1 bis 3, **dadurch gekennzeichnet, dass** die beiden Einsätze mit zumindest einem Brückenabschnitt oder Brückenteil (29, 30) als insgesamt einstückiges Kunststoffbauteil in Form eines Einsatzbauteils (26) ausgebildet sind.

5. Schlitten nach Anspruch 4, **dadurch gekennzeichnet, dass** jeweils im Bereich oberer Begrenzungsflächen der Umlenkkanäle jeweils ein Brückenabschnitt oder Brückenteil (29, 30) ausgebildet ist, der sich über den oberen Begrenzungsflächen (32, 33) und über den Wälzkörperumläufen (7) befindet und jeweils einstückig mit den Einsätzen ausgebildet ist.

6. Schlitten nach Anspruch 4 oder 5, **dadurch gekennzeichnet, dass** das einstückige Einsatzbauteil (26) und das einstückige Kunststoffbauteil (22) mittels zumindest einer Schnappverbindung lösbar miteinander verbunden sind.

7. Schlitten nach einem der Ansprüche 4 bis 6, **dadurch gekennzeichnet, dass** das einstückige Einsatzbauteil (26) und der Grundkörper (15) des Schlittens mittels zumindest einer Schnappverbindung lösbar miteinander verbunden sind.

8. Schlitten nach zumindest einem der vorhergehenden Ansprüche, **dadurch gekennzeichnet, dass** das einstückige Kunststoffbauteil (22) im Bereich der stirnseitigen Umlenkkanäle (11) jeweils einen Verbindungsteil aufweist, mit dem jeweils im einstückigen Kunststoffbauteil (22) ausgebildete Abschnitte der beiden Umlaufkanäle (11) in beiden Schenkeln des Schlittens miteinander verbunden sind.

9. Schlitten nach zumindest einem der vorhergehenden Ansprüche, **dadurch gekennzeichnet, dass** an beiden äusseren, vorzugsweise zumindest im wesentlichen ebenen, Stirnflächen des Kunststoffbauteils (22) jeweils eine Stirnplatte (43) durch eine lösbare Verbindung, vorzugsweise durch eine Schnappverbindung, befestigt ist.

10. Schlitten nach zumindest einem der vorhergehenden Ansprüche, **gekennzeichnet durch** einen im Querschnitt zumindest im wesentlichen U-förmigen - und vorzugsweise metallischen - Grundkörper (15) des Schlittens (5), welcher an parallel und mit Abstand zueinander verlaufenden Schenkeln des Grundkörpers (15) Flächen für Lastbereiche (8) der Wälzkörperumläufe (7) aufweist.

11. Linearbewegungsführung (1) zur geradlinigen Führung von Objekten, die eine Schiene (2) mit einer Oberseite sowie mit zwei Seitenflächen versehen ist, wobei an den Seitenflächen jeweils zumindest eine Führungsfläche vorgesehen ist, sowie
mit einem Schlitten (5) versehen ist, der einen im wesentlichen U-förmigen Querschnitt aufweist, wobei in jedem der beiden sich aus der U-förmigen Gestaltung ergebenden Schenkel (5a) zumindest ein in sich geschlossener Wälzkörperumlauf (7) vorgesehen ist, in dem Wälzkörper, insbesondere Wälzkugeln, in einem Lastabschnitt (8), einem Rücklaufkanal (10) und zwei den Lastabschnitt (8) und den Rücklaufkanal (10) miteinander verbindende Umlenkkanäle (11) zirkulieren, wobei die sich im Lastabschnitt (8) befindenden Wälzkörper sich sowohl an der Schiene (2) als auch am Schlitten (5) abstützen, **gekennzeichnet durch** einen Schlitten (5) nach einem der Ansprüche 1 bis 10.

## Claims

1. Carriage (5) of a linear movement guide (1) for arrangement on a rail (2) of the linear movement guide, the carriage having an at least substantially U-shaped cross section and being provided at least with a substantially U-shaped main body (15) supplemented with plastics components, wherein the carriage (5) in the two legs (5a) of the U shape is provided with at least one respective intrinsically closed rolling-body recirculating means (7), each of which is held open towards the rail (2),
**characterized in that**
a one-piece plastics component (22) in the two legs (5a) of the carriage (5) is used in each case to form at least parts of inner and outer boundary surfaces of a return channel (10) and the two deflection channels (11) of one of the rolling-body recirculating means (7) in the respective leg (5a), and **in that** a respective insert for forming upper boundary surfaces (32, 33) is provided for two rolling-body recirculating means (7) arranged in different legs (5a) of the carriage (5), wherein the two inserts are connected to one another in one piece by means of at least one bridge portion or bridge part (29, 30) .

2. Carriage according to Claim 1, **characterized in that** both the complete inner and the complete outer boundary surfaces of the two respective deflection channels (11) of the rolling-body recirculating means (7) provided in each of the two legs are formed on the one-piece plastics component (22).

3. Carriage according to Claim 1 or 2, **characterized in that** all the lower, inner and outer boundary surfaces of the rolling-body recirculating means (7) provided in the two legs (5a) of the carriage (5) are formed on the one-piece plastics component (22).

4. Carriage according to one of Claims 1 to 3, **characterized in that** the two inserts with at least one bridge portion or bridge part (29, 30) are designed as an overall one-piece plastics component in the form of an insert component (26).

5. Carriage according to Claim 4, **characterized in that** a respective bridge portion or bridge part (29, 30), which is located over the upper boundary surfaces (32, 33) and over the rolling-body recirculating means (7) and in each case is formed in one piece with the inserts, is formed in each case in the region of upper boundary surfaces of the deflection channels.

6. Carriage according to Claim 4 or 5, **characterized in that** the one-piece insert component (26) and the one-piece plastics component (22) are detachably connected to one another by means of at least one snap-fit connection.

7. Carriage according to one of Claims 4 to 6, **characterized in that** the one-piece insert component (26) and the main body (15) of the carriage are detachably connected to one another by means of at least one snap-fit connection.

8. Carriage according to at least one of the preceding claims, **characterized in that**, in the region of the endface deflection channels (11), the one-piece plastics component (22) has a respective connecting part by means of which respective portions, formed in the one-piece plastics component (22), of the two deflection channels (11) in the two legs of the carriage are connected to one another.

9. Carriage according to at least one of the preceding claims, **characterized in that** a respective end plate (43) is fastened to the two outer, preferably at least substantially flat, end faces of the plastics component (22) by a detachable connection, preferably by a snap-fit connection.

10. Carriage according to at least one of the preceding claims, **characterized by** a - preferably metallic - main body (15) of the carriage (5), the main body being at least substantially U-shaped in cross section and having surfaces for load regions (8) of the rolling-body recirculating means (7) on legs of the main body (15) that extend spaced apart from and parallel to one another.

11. Linear movement guide (1) for the guidance of objects in a straight line, which is provided with a rail (2) having an upper side and two side surfaces, wherein at least one guide surface is provided on each of the side surfaces, and
is provided with a carriage (5), which has a substantially U-shaped cross section, wherein at least one intrinsically closed rolling-body recirculating means (7) is provided in each of the two legs (5a) produced by the U-shaped form, in which rolling-body recirculating means rolling bodies, in particular rolling balls, circulate in a load portion (8), a return channel (10), and two deflection channels (11) connecting the load portion (8) and the return channel (10) to one another, wherein the rolling bodies in the load portion (8) are supported both on the rail (2) and on the carriage (5), **characterized by** a carriage (5) according to one of Claims 1 to 10.

## Revendications

1. Chariot (5) d'un guide de mouvement linéaire (1) destiné à être agencé sur un rail (2) du guide de mouvement linéaire, qui présente une section transversale au moins essentiellement en forme de U et est pourvu d'au moins un corps de base (15) essentiellement en forme de U, qui est complété par des composants en matière plastique, le chariot (5) étant pourvu, dans les deux branches (5a) de la forme en U, respectivement d'au moins un circuit de corps de roulement (7) fermé sur lui-même, qui est maintenu respectivement ouvert vers le rail (2),
**caractérisé en ce**
**qu'**au moins des parties de surfaces de délimitation intérieures et extérieures d'un canal de retour (10) et de deux canaux de renvoi (11) de l'un des circuits de corps de roulement (7) sont réalisées dans la branche respective (5a) au moyen d'un composant en matière plastique (22) d'une seule pièce dans les deux branches (5a) du chariot (5), et **en ce que**, pour deux circuits de corps de roulement (7) agencés dans des branches (5a) différentes du chariot (5), un insert est prévu respectivement pour réaliser des surfaces de délimitation supérieures (32, 33), les deux inserts étant reliés l'un à l'autre d'une seule pièce par au moins une section de pontage ou partie de pontage (29, 30).

2. Chariot selon la revendication 1, **caractérisé en ce que** sur le composant en matière plastique (22) d'une seule pièce sont réalisées aussi bien les surfaces de délimitation entièrement intérieures qu'entièrement extérieures des deux canaux de renvoi (11) respectifs des circuits de corps de roulement (7) prévus dans chacune des deux branches.

3. Chariot selon la revendication 1 ou 2, **caractérisé en ce que** toutes les surfaces de délimitation inférieures, intérieures et extérieures des circuits de corps de roulement (7) prévus dans les deux branches (5a) du chariot (5) sont réalisées sur le composant en matière plastique (22) d'une seule pièce.

4. Chariot selon l'une quelconque des revendications 1 à 3, **caractérisé en ce que** les deux inserts sont réalisés avec au moins une section de pontage ou partie de pontage (29, 30) en tant que composant en matière plastique globalement d'une seule pièce sous la forme d'un composant d'insert (26).

5. Chariot selon la revendication 4, **caractérisé en ce que** dans la zone de surfaces de délimitation supérieures des canaux de renvoi est réalisée respectivement une section de pontage ou partie de pontage (29, 30), qui se trouve au-dessus des surfaces de délimitation supérieures (32, 33) et au-dessus des circuits de corps de roulement (7) et est réalisée respectivement d'une seule pièce avec les inserts.

6. Chariot selon la revendication 4 ou 5, **caractérisé en ce que** le composant d'insert (26) d'une seule pièce et le composant en matière plastique (22) d'une seule pièce sont reliés entre eux de manière amovible au moyen d'au moins une liaison par encliquetage.

7. Chariot selon l'une quelconque des revendications 4 à 6, **caractérisé en ce que** le composant d'insert (26) d'une seule pièce et le corps de base (15) du chariot sont reliées entre eux de manière amovible au moyen d'au moins une liaison par encliquetage.

8. Chariot selon au moins l'une quelconque des revendications précédentes, **caractérisé en ce que** le composant en matière plastique (22) d'une seule pièce présente respectivement, dans la zone des canaux de renvoi (11) frontaux, une partie de liaison avec laquelle des sections des deux canaux de circulation (11), réalisées dans le composant en matière plastique (22) d'une seule pièce, sont reliées respectivement entre elles dans les deux branches du chariot.

9. Chariot selon au moins l'une quelconque des revendications précédentes, **caractérisé en ce qu'**une plaque frontale (43) est fixée respectivement sur les deux surfaces frontales extérieures, de préférence au moins essentiellement planes, du composant en matière plastique (22) par une liaison amovible, de préférence par une liaison par encliquetage.

10. Chariot selon au moins l'une quelconque des revendications précédentes, **caractérisé par** un corps de base (15) du chariot (5) à section transversale au moins essentiellement en forme de U, et de préférence métallique, qui présente, sur des branches du corps de base (15) s'étendant parallèlement et à distance l'une de l'autre, des surfaces pour les zones de charge (8) des circuits de corps de roulement (7).

11. Guide de mouvement linéaire (1) pour le guidage rectiligne d'objets, qui est pourvu d'un rail (2) avec un côté supérieur ainsi que deux surfaces latérales, au moins une surface de guidage étant prévue respectivement sur les surfaces latérales, et
qui est pourvu d'un chariot (5) qui présente une section transversale essentiellement en forme de U, au moins un circuit de corps de roulement (7) fermé sur lui-même étant prévu dans chacune des deux branches (5a) résultant de la configuration en forme de U, dans lequel des corps de roulement, notamment des billes de roulement, circulent dans une section de charge (8), un canal de retour (10) et deux canaux de renvoi (11) reliant entre eux la section de charge (8) et le canal de retour (10), les corps de roulement qui se trouvent dans la section de charge (8) s'appuyant aussi bien sur le rail (2) que sur le chariot (5), **caractérisé par** un chariot (5) selon l'une quelconque des revendications 1 à 10.
